# EUROPÄISCHE PATENTANMELDUNG

(11) **EP 2 301 695 A2**
(43) Veröffentlichungstag der Anmeldung: **30.03.2011**
(21) Anmeldenummer: 10010504.8
(22) Anmeldetag: 10.02.2005
(51) Int. Cl.: B23B 31/107, B23B 29/04

(54) **Spannelement für Werkzeugspanner**

(30) Priorität: 12.02.2004 DE 102004009217
(62) Teilanmeldung aus: 05714955.1
(71) Anmelder: Gühring, Jörg, Dr., 72458 Albstadt (DE)
(72) Erfinder: Matheis, Klaus, 88605 Sauldorf / Rast (DE)
(74) Vertreter: Meitinger, Thomas Heinz

(57) **Zusammenfassung**

Ein Spannelement einer Kupplung zur lösbaren dreh- und axialfesten Fixierung von Bauteilen, insbesondere von Werkzeugkomponente für die Trockenbearbeitung (MMS- Technologie) sowie auch für die nasse Bearbeitung, das für optimalen Kraftfluss zwischen den zu kuppelnden Teilen sorgt. Durch das zentrisch in der Kupplung angeordnete Kühlkanalrohr (2) wurden die Geometrien der Spannelemente geändert. In der Spindel befindet sich ein Langloch, durch welches das Kühlmittelrohr (2) geführt wird und die radiale Auslenkung der Spannsegmente (5) kompensiert. Durch die konstruktiv veränderte Ausbildung der Spannsegmente (5) zwischen Grundkörper (7) und Spannsegment wurde die Kraftverteilung für die Abstützung der Spannsegmente (5) grösser. Die neue geometrische Ausbildung der Spannsegmente (5), ergeben im Grundköper neue Konturen (6) mit weicheren Übergängen und dadurch einen besseren Kräfteverlauf, was einen Materialbruch um ein vielfaches vermindert sowie eine zuverlässige bzw. grössere Spannung gewährleistet. Die Spannsegmente (5) besitzen durch die neue geometrische Ausbildung eine grössere Fläche, welche dadurch grössere Spannschrauben (8) unterbringen lässt. Durch die Spannschraube (8), wird das neue Spannelement, die Spindel (3) und das Spannsegment (5), radial ausgelenkt. Die Spindel (3) die sich zwischen der Spannschraube (8) und dem Spannsegment (5) befindet, besitzt im gespanntem Zustand der Kupplung, am Gewindeauslauf der Spannschraube (8) mehr Gewindegänge (10) im Eingriff, so das eine höhere Spannsicherheit gewährleistet werden kann.

## Beschreibung

Die Erfindung betrifft ein Spannelement einer Kupplung zur lösbaren dreh- und axialfesten Fixierung von Bauteilen, insbesondere von Werkzeugkomponente, an entsprechenden Trägerteilen, wie z. B. an einer Werkzeuggrundaufnahme.

Die Erfindung bezieht sich auf Kupplungsvorrichtungen zwischen einem Werkstück- oder Werkzeugträgerteil, wie z.B. einem Werkzeugsystemmodul, beispielsweise in Form einer Werkzeuggrundaufnahme und einer zugehörigen Handhabungseinrichtung, wie z.B. einer Werkzeugmaschine, beispielsweise in der Ausgestaltung als Bohr-, Dreh- oder Fräsmaschine. Die Kupplungsvorrichtung dienen dabei sowohl für stehende als auch für bewegte, wie z. B. drehende Werkstück- oder Werkzeugträgerteile, wie z. B. Werkzeugsystemmodule. Das Spannsystem zur lösbaren Verbindung zweier vorzugsweise rotationssymmetrischer Teilen, von denen ein Teil einen vorzugsweise zylindrischen oder konischen Hohlschaft und das andere Teil einen entsprechenden Aufnahmeabschnitt zur passungsgenauen Aufnahme des Hohlschafts aufweist. Das Spannsystem umfasst eine konzentrisch im Aufnahmeabschnitt angeordnete Spanneinrichtung, die sich im aneinandergefügten Zustand der beiden Teile in den Hohlschaft des einen Teils erstreckt und zumindest zwei gegensinnig bewegbare Spannkörper sowie eine die Spannkörper antreibende Betätigungseinrichtung, durch welche die Spannkörper synchron in und außer Eingriff mit einer hinterschnittenen Spannschulter des Hohlschafts bewegbar sind, wodurch zwischen Planflächen der bei den zu verbindenden Teile eine Anpresskraft erzeugt wird. Erfindungsgemäß sind die Spannelemente radial gleitbeweglich.

Das Spannsystem bezieht sich auf hohe Drehzahlen und zur lösbaren Verbindung zweier Teilen, wie Sie aus den Patentschriften DE 42 11 034 bekannt sind. Eine sehr leistungsfähige Kupplung für den Bereich der Schnittstelle zwischen Werkzeugmaschine und Werkzeugmodul ist in der EP 0291 048 B1 und EP 0409973 B1 sowie EP 01035934 B1 und EP 1175272 B1 beschrieben und es kommt darauf an, die zu verbindenden Teile zuverlässig und fest aneinander zu klammern.

Erfindungsgemäß wird ein Spannelement 1 für die Trockenbearbeitung wie z. B.(MMS-Technologie) sowie auch für die nasse Bearbeitung geschaffen, das für optimalen Kraftfluss zwischen den zu kuppelnden Teilen sorgt. Durch das zentrisch in der Kupplung angeordnete Kühlkanalrohr 2 wurden die Geometrien der Spannelemente geändert. In der Spindel 3 befindet sich ein Langloch, durch welches das Kühlmittelrohr geführt wird. Das in der Spindel befindliche Langloch 4 besitzt ein radiales Spiel, welches die radiale Auslenkung der Spannsegmente 5 kompensiert. Durch die konstruktiv veränderte Ausbildung. 6 der Spannsegmente zwischen Grundkörper 7 und Spannsegment 5 ist die Kraftverteilung für die Abstützung der Spannsegmente größer. Die neue geometrische Ausbildung der Spannsegmente, ergeben im Grundköper neue Konturen mit weicheren Übergängen und dadurch einen besseren Kräfteverlauf, was einen Materialbruch um ein vielfaches vermindert sowie eine zuverlässige bzw. größere Spannung gewährleistet.

Die Spannsegmente besitzen durch die geänderte Ausbildung eine größere Fläche, welche dadurch größere Spannschrauben 8 unterbringen lässt. Durch die Spannschraube wird das Spannelement radial ausgelenkt 9.

Die Spindel die sich zwischen der Spannschraube und dem Spannsegment befindet, besitzt im gespanntem Zustand der Kupplung, am Gewindeauslauf der Spannschraube mehr Gewindegänge im Eingriff 10, so das eine höhere Spannsicherheit gewährleistet werden kann.

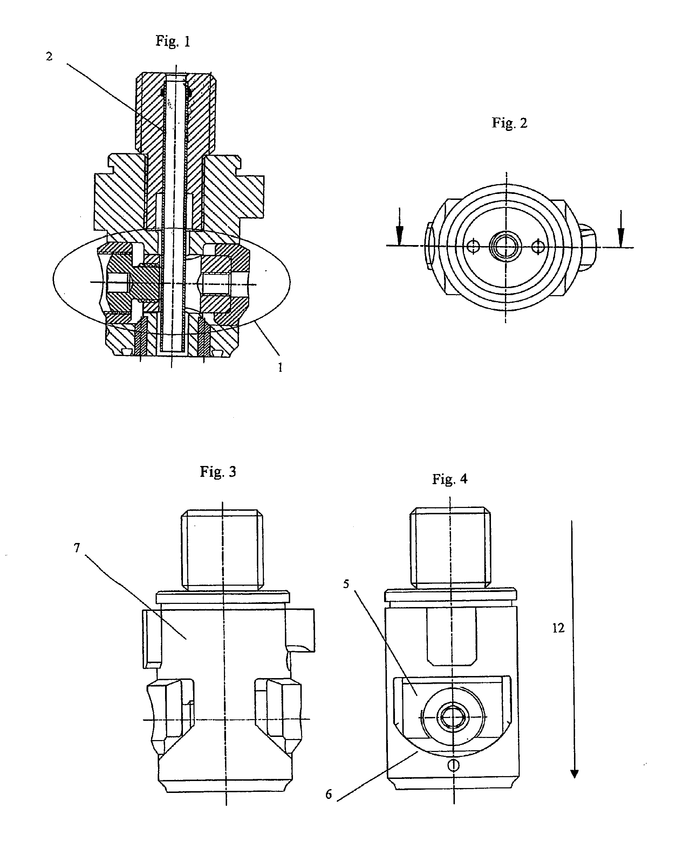

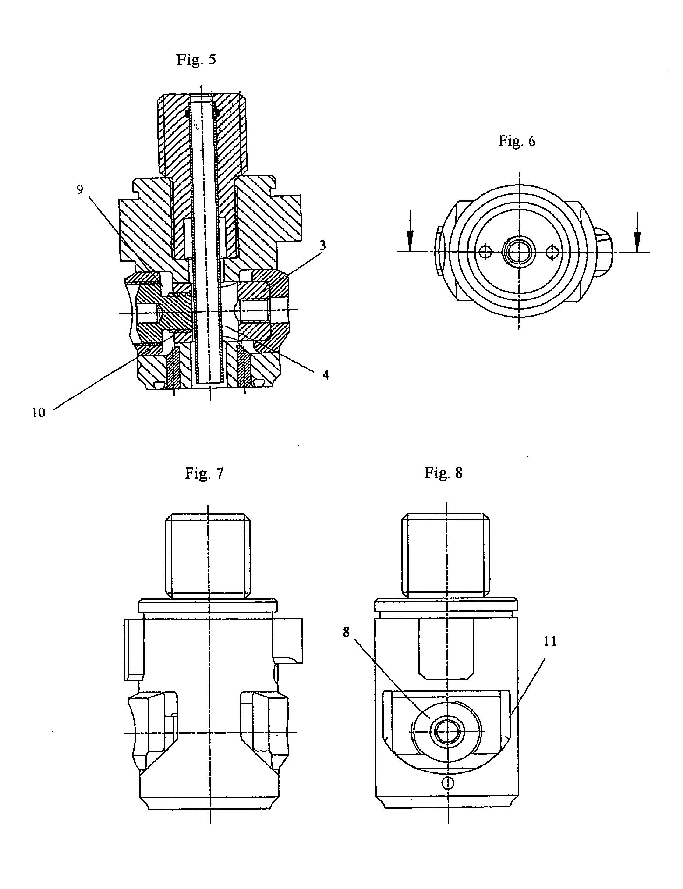

## Patentansprüche

1. Spannsystem zur lösbaren Verbindung zweier vorzugsweise rotationssymmetrischer Teile von denen ein Teil einen vorzugsweise zylindrischen oder konischen Hohlschaft und das andere Teil einen entsprechenden Aufnahmeabschnitt zur passungsgenauen Aufnahme des Hohlschafts aufweist, mit einer konzentrisch im Aufnahmeabschnitt angeordneten Spanneinrichtung, die sich im aneinandergefügten Zustand der beiden Teile in den Hohlschaft des einen Teils erstreckt, welches mit einem Kühlmittelrohr und einem Spannelement ausgerüstet ist, dass mit einer Spindel, einem Spannsegment und mit einer Spannschraube versehen ist **dadurch gekennzeichnet, dass** die Ausnehmung 6 im Grundkörper für die Spannsegmente 5 an der Anlagefläche zum Werkzeug 12 abgerundet oder abgeschrägt ausgebildet ist.

2. Spannsystem nach Anspruch 1, **dadurch gekennzeichnet, dass** die Spannsegmente an der zum Werkzeug gerichteten Seite abgerundet ausgebildet sind.

3. Spannsystem nach Anspruch 1 und 2, **dadurch gekennzeichnet, dass** durch die abgerundete Ausbildung der Spannsegmente, die Sparinschraube 8 größer dimensioniert werden kann.

4. Spannsystem nach Anspruch 1 und 3, **dadurch gekennzeichnet, dass** durch die abgerundete Ausbildung der Spannsegmente, der Spannschraubenkopf größer dimensioniert werden kann.

5. Spannsystem nach Anspruch 1 und 4, **dadurch gekennzeichnet, dass** durch die Spannschraube, die Spindel und das Spannsegment radial ausgelenkt werden.

6. Spannsystem, nach Anspruch 1 und 5, **dadurch gekennzeichnet**, das die Übergänge der Kontur der Anlagefläche an der zum Werkzeug gerichteten Seite 12 zur Kontur der axial parallel verlaufender Ausnehmung 11, abgerundet ausgebildet ist.

7. Spannsystem, nach Anspruch 1 und 6, **dadurch gekennzeichnet**, das die Übergänge der Konturen, der Spannsegmente an der zum Werkzeug gerichteten Seite 12 zum Übergang der axial parallel verlaufender Kontur, abgerundet ausgebildet sind.

8. Spannsystem, nach Anspruch 1 und 7, **dadurch gekennzeichnet**, das die Übergänge der Konturen der Spannsegmente an der zum Werkzeug gerichteten Seite zum Übergang der axial parallel verlaufender Kontur, in einem zur x-Achse verlaufendem Winkel von 30° bis 80° abgeschrägt ausgebildet sind.

9. Spannsystem, nach Anspruch 1 und 8, **dadurch gekennzeichnet**, das die Übergänge der Kontur der Anlagefläche an der zum Werkzeug gerichteten Seite 12 zur Kontur der axial parallel verlaufender Ausnehmung, in einem zur x-Achse verlaufendem Winkel von 30° bis 80° abgeschrägt ausgebildet sind.

10. Spannsystem, nach Anspruch 1 und 9, **dadurch gekennzeichnet**, das die Anlagefläche an der zum Werkzeug gerichteten Seite 12 abgerundet und abgeschrägt in einem zur x-Achse verlaufendem Winkel von 30° bis 80° ausgebildet ist.

11. Spannsystem, nach Anspruch 1 und 10, **dadurch gekennzeichnet**, das die Kontur, der Spannsegmente an der zum Werkzeug gerichteten Seite abgerundet und abgeschrägt in einem zur x-Achse verlaufendem Winkel von 30° bis 80° ausgebildet sind.
